# FASCICULE DE BREVET EUROPEEN

(11) **EP 0 605 292 B1**
(45) Date de publication et mention de la délivrance du brevet: **01.05.1996**
(21) Numéro de dépôt: 93403122.0
(22) Date de dépôt: 21.12.1993
(51) Int. Cl.: B64C 25/14, B64C 25/34

(54) **Atterrisseur relevable, notamment pour avion gros porteur**
Einziehfahrwerk, insbesondere eines Grossraumflugzeuges
Retractable landing-gear, in particular for wide-body aircraft

(30) Priorité: 28.12.1992 FR 9215783
(43) Date de publication de la demande: 06.07.1994
(73) Titulaire: MESSIER BUGATTI, F-78140 Velizy Villacoublay (FR)
(72) Inventeur: Derrien, Michel, F-78000 Versailles (FR); Brisedou, Philippe, F-94260 Fresnes (FR)
(74) Mandataire: Jaunez, Xavier

(56) Documents cités:
- EP-A- 0 492 685
- FR-A- 1 232 741
- US-A- 2 754 072

## Description

L'invention concerne les atterrisseurs relevables, notamment pour les avions gros porteurs, du type comportant une jambe articulée se composant d'un caisson d'amortisseur équipé d'un axe d'articulation à une structure d'avion, et d'une tige d'amortisseur en extrémité de laquelle est articulée une poutre longitudinale équipée de plusieurs paires de roues, ainsi qu'un moyen de contreventement associé à cette jambe articulée.

Les atterrisseurs de ce type comportent au moins quatre roues, et en général six ou huit roues dans le cas des gros porteurs, c'est-à-dire d'avions dont le poids dépasse largement 400 tonnes. La jambe de ces atterrisseurs est naturellement dimensionnée en conséquence, de sorte que le logement associé à la réception de l'atterrisseur en position train haut est nécessairement long, ce qui oblige à prévoir un renforcement de la structure de l'avion.

On pourra par exemple se référer aux documents EP-A-0 492 685, EP-A-0 492 687 et EP-A-0 492 688.

De plus, l'agencement de la jambe d'atterrisseur et du moyen de contreventement associé est tel que des efforts tranchants importants sont exercés sur la tige d'amortisseur par le train de roues lors de son appui sur le sol, de sorte que la jambe doit être dimensionnée en conséquence pour que cette tige coulissante puisse en toutes circonstances coulisser normalement.

Enfin, la présence d'une poutre longitudinale articulée équipée de paires de roues (on parle souvent de bogie basculant) oblige à prévoir une cinématique particulière si l'on veut que cette poutre se présente, en position train haut, avec une orientation qui soit compatible avec la compacité recherchée du logement de réception. A ce titre, on a d'ailleurs proposé, pour avoir une hauteur de logement minimale, d'agencer une cinématique pour effectuer un basculement complet, avec un pivotement de 180°, de la poutre longitudinale, avant la rétraction de l'ensemble du train principal concerné.

L'arrière-plan technologique de l'invention est également illustré par les documents EP-A-0 361 549, US-A-2 754 072 et FR-A-1 232 741.

L'invention a pour but de concevoir un atterrisseur relevable ne présentant pas les inconvénients et/ou limitations précités.

L'invention a ainsi pour objet de réaliser un atterrisseur relevable dont la structure permet à la fois de prévoir un logement de volume minimal pour la position train haut, et d'avoir une reprise optimale, tant dans l'atterrisseur que dans la structure d'avion, des efforts longitudinaux et latéraux en position train bas, lors du contact avec le sol.

Il s'agit plus particulièrement d'un atterrisseur relevable, comportant une jambe articulée se composant d'un caisson d'amortisseur équipé d'un axe d'articulation à une structure d'avion, et d'une tige d'amortisseur en extrémité de laquelle est articulée une poutre longitudinale équipée de plusieurs paires de roues, ainsi qu'un moyen de contreventement associé à cette jambe articulée, caractérisé en ce que:
- l'atterrisseur est du type à raccourcissement de jambe, avec un amortisseur se composant principalement d'une tige coulissante et d'une tige plongeuse, et d'un système articulé reliant cette tige plongeuse au caisson d'amortisseur en étant commandé par une bielle fixée sur la structure d'avion, de façon à tirer l'amortisseur lors du relevage de la jambe et à repousser cet amortisseur lors de la descente de ladite jambe ;
- le moyen de contreventement est réalisé sous forme d'une contrefiche repliable dont le bras supérieur est articulé à la structure d'avion et le bras inférieur à l'extrémité inférieure de la tige coulissante, ladite contrefiche étant en outre agencée de telle façon qu'en position train bas, la jambe descendue soit inclinée vers l'avant de l'avion.

De préférence, l'axe d'articulation du caisson d'amortisseur à la structure d'avion est perpendiculaire au plan longitudinal médian de l'avion, et la contrefiche repliable est disposée en avant de la jambe, de façon que le relevage s'effectue longitudinalement vers l'avant.

Il est également intéressant que la jambe comporte en outre un compas dont le bras supérieur est articulé au caisson d'amortisseur et le bras inférieur à la poutre longitudinale qui est articulée en extrémité de la tige coulissante.

Avantageusement alors, un amortisseur de tangage est interposé entre le compas et le caisson d'amortisseur, lequel amortisseur de tangage est par exemple articulé sur un appendice du bras supérieur du compas. De préférence encore, le compas et l'amortisseur de tangage sont disposés en avant de la jambe.

Il est par ailleurs avantageux que le système articulé associé au raccourcissement de jambe comporte un levier articulé en partie haute du caisson d'amortisseur, comprenant un bras long formant un alignement avec un bras articulé sur la tige plongeuse d'amortisseur, et un bras court articulé en extrémité d'une bielle élastique à seuil qui est fixée par son autre extrémité à la structure d'avion.

De préférence encore, la course de rétraction de l'amortisseur et les deux bras du compas sont agencés de telle façon qu'en position train haut, la poutre longitudinale soit automatiquement dans une position essentiellement horizontale. Ceci permet alors d'organiser de façon optimale le logement du train dans un espace du fuselage qui est de faible hauteur.

Avantageusement en outre, les deux bras de la contrefiche repliable sont agencés de telle façon qu'en position train bas et amortisseur détendu, la direction de l'alignement formé par la contrefiche soit sensiblement orthogonale à l'axe de la jambe. Un tel agencement permet non seulement de minimiser l'application d'efforts tranchants sur la tige coulissante, ce qui autorise, grâce à la reprise des moments par la contrefiche et le compas, un allégement notable de la structure de cette tige coulissante, mais aussi de minimiser les mouvements de pivotement de la jambe.

Enfin, conformément à un mode d'exécution particulier, la contrefiche repliable est une contrefiche briseuse équipée de son propre système de déverrouillage, et cette contrefiche est en outre agencée de telle façon que la direction de l'alignement qu'elle définit en position train bas converge avec l'axe de la tige coulissante aussi près que possible de l'axe d'articulation de la poutre longitudinale.

D'autres caractéristiques et avantages de l'invention apparaîtront plus clairement à la lumière de la description qui va suivre et des dessins annexés, concernant un mode de réalisation particulier, en référence aux figures où :

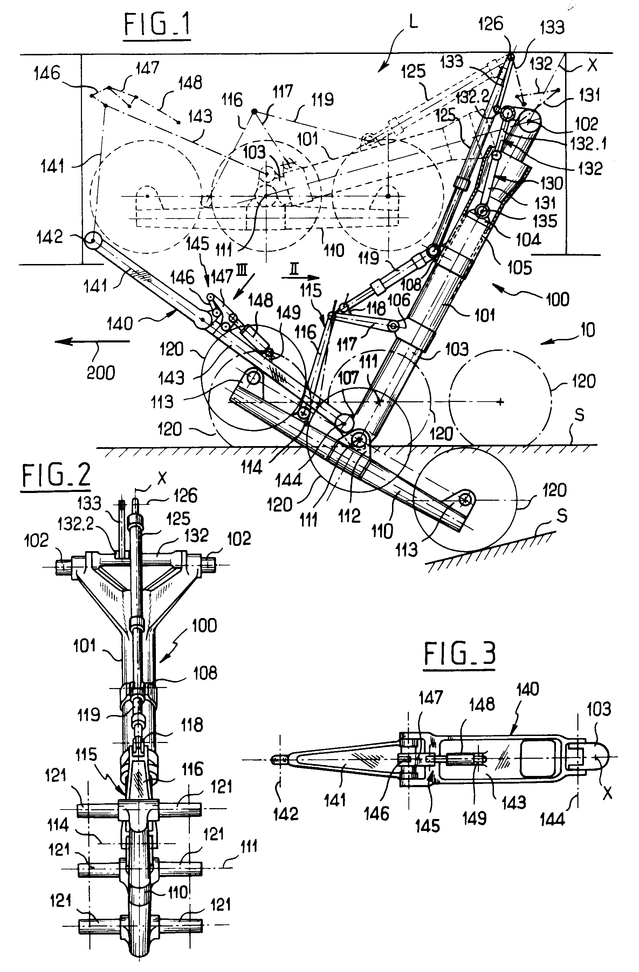

- la figure 1 est une vue en élévation illustrant un atterrisseur relevable conforme à l'invention, en position train bas (deux positions de contact avec le sol sont illustrées, à savoir le contact d'atterrissage en traits continus, et le contact au roulage sur piste en traits mixtes), la position train haut étant également illustrée, en pointillés, pour les composants essentiels de cet atterrisseur (les autres composants étant seulement schématisés par des traits mixtes) ;
- les figures 2 et 3 sont des vues respectivement selon les flèches II et III de la figure 1, permettant ainsi de mieux appréhender la structure de la jambe d'atterrisseur et de la contrefiche repliable associée.

Les figures illustrent un atterrisseur relevable 10 conforme à l'invention, comportant une jambe articulée 100 se composant d'un caisson d'amortisseur 101 équipé d'un axe d'articulation 102 à une structure d'avion, et d'une tige d'amortisseur 103 en extrémité de laquelle est articulée une poutre longitudinale 110 (le terme "longitudinal" signifie que la direction générale de cette poutre est parallèle au plan longitudinal vertical médian de l'avion) équipée de plusieurs paires de roues 120, ainsi qu'un moyen de contreventement 140 associé à cette jambe articulée.

Conformément à une caractéristique de l'invention, l'atterrisseur 10 est du type à raccourcissement de jambe, avec un amortisseur se composant principalement d'une tige coulissante 103 et d'une tige plongeuse 104, et un système articulé 130 qui relie cette tige plongeuse au caisson d'amortisseur 101, en étant commandé par une bielle élastique à seuil 133 fixée en 126 sur la structure d'avion, de façon à tirer l'amortisseur lors du relevage de la jambe 100 et à repousser cet amortisseur lors de la descente de ladite jambe.

La tige plongeuse 104 coulisse ici dans un palier 105, lequel palier est ménagé en partie haute du caisson 101, (on pourrait en variante ménager ce palier sur la tige plongeuse 104). Le fond supérieur de cette tige plongeuse est relié en 135 au système articulé 130. Dans la pratique, la tige coulissante comportera une cloison intermédiaire délimitant une chambre inférieure de fluide hydraulique qui communique, par l'intermédiaire d'un diaphragme, avec une chambre supérieure de fluide hydraulique intérieure à la tige plongeuse. De plus, la tige plongeuse 104 comportera un fond inférieur muni de trous réalisant la fonction diaphragme, et traversé en son centre par une tige qui est solidaire du fond de la tige coulissante 103.

Le système articulé 130 permet de tirer l'amortisseur, sans le comprimer, lorsque la tige plongeuse 104 est tirée (vers l'axe d'articulation 102 de la jambe) lors du relevage de la jambe d'atterrisseur 100, ou d'allonger cette jambe lorsque la tige plongeuse 104 est repoussée par ce système articulé (lors de la descente de ladite jambe d'atterrisseur). En l'espèce, le système articulé 130 associé au raccourcissement de jambe comporte un levier 132 articulé en partie haute du caisson d'amortisseur 101, comprenant un bras long 132.1 qui forme un alignement avec un bras 131 articulé en 135 sur la tige plongeuse d'amortisseur 104, et un bras court 132.2 articulé en extrémité d'une bielle élastique à seuil 133 qui est quant à elle fixée par son autre extrémité 126 à la structure d'avion.

Si l'on compare les positions train haut et train bas illustrées en figure 1, on constate qu'en position train haut, la jambe articulée 100 est raccourcie, ce qui est favorable à l'obtention d'un logement L de longueur minimale pour recevoir l'atterrisseur relevable 10 en position train haut. Un vérin de manoeuvre 125, articulé par un axe 126 à la structure d'avion, et par un appendice 108 au caisson 101 de la jambe articulée 100, assure les mouvements de relevage et de descente de cette jambe articulée, et par suite produit automatiquement le raccourcissement de la jambe au relevage et l'allongement de la jambe à la descente de celle-ci.

La poutre longitudinale 110 est montée pivotante autour d'un axe 111 en extrémité de la tige coulissante 103, par un appendice 112 ménagé au centre de cette poutre. Des appendices d'extrémité 113 sont prévus en bout de la poutre longitudinale 110, ces différents appendices étant associés aux essieux 121 (mieux visibles sur la figure 2) des paires de roues 120 de l'atterrisseur. En l'espèce, la poutre longitudinale 110 est équipée de trois paires de roues, mais il va de soi que l'invention s'appliquerait aussi bien à une jambe équipée de deux paires de roues (à la façon des bogies basculants conventionnels), ou encore de quatre paires de roues.

Conformément à une autre caractéristique de l'invention, le moyen de contreventement associé à la jambe articulée 100 est réalisé sous la forme d'une contrefiche repliable 140, dont le bras supérieur 141 est articulé en 142 à la structure d'avion, et le bras inférieur 143 est articulé en 144 (ici par un appendice 107) à l'extrémité inférieure de la tige coulissante 103, et cette contrefiche 140 est en outre agencée de telle façon qu'en position train bas, la jambe 100 descendue soit inclinée vers l'avant de l'avion (la direction de l'avant de l'avion est repérée par la flèche 200 sur la figure 1). Ainsi que cela sera expliqué plus loin, cette disposition est favorable à une bonne reprise des efforts longitudinaux et latéraux lors du contact avec le sol.

En l'espèce, l'axe d'articulation 102 du caisson d'amortisseur 101 est perpendiculaire au plan longitudinal médian de l'avion, et la contrefiche repliable 140 est disposée en avant de la jambe 100, de façon que le relevage s'effectue longitudinalement vers l'avant. On obtient ainsi, par la combinaison du mouvement de rotation du caisson d'amortisseur 101 et de la rétraction de l'amortisseur de jambe une remontée quasi verticale du train de roues 120 dans le logement associé L. De plus, le fait de prévoir un relevage s'effectuant par l'avant est favorable, dans la mesure où les efforts aérodynamiques ont une action positive sur la jambe d'atterrisseur lors de la descente de celle-ci.

La jambe d'atterrisseur 100 comporte en outre un compas 115, dont le bras supérieur 117 est articulé (par un appendice 106) au caisson d'amortisseur 101, et le bras inférieur 116 est articulé à la poutre longitudinale 110, par un appendice 114 de celle-ci. Cet agencement du compas diffère ainsi sensiblement des agencements conventionnels dans lesquels le bras inférieur du compas est articulé sur la tige d'amortisseur.

Une telle disposition est particulièrement avantageuse lorsque la course de rétraction de l'amortisseur et la géométrie du compas 115 sont convenablement choisies. En effet, par un choix judicieux, il est possible de faire en sorte qu'en position train haut, la poutre longitudinale 110 soit automatiquement dans une position essentiellement horizontale. Ainsi, sans qu'il soit besoin de prévoir une quelconque cinématique supplémentaire, le relevage de la jambe d'atterrisseur 100 permet de ramener automatiquement le bogie basculant en position horizontale en fin de relevage de ladite jambe. Un tel agencement est naturellement favorable à l'obtention d'un logement L de hauteur minimale.

Il est en outre intéressant de prévoir alors un amortisseur de tangage 119, interposé entre le compas 115 et le caisson d'amortisseur 101. En l'espèce, le corps de l'amortisseur de tangage 119 est articulé au niveau de l'appendice 108 déjà cité du caisson 101, et la tige dudit amortisseur est articulée sur un appendice 118 du bras supérieur 117 du compas 115. Le compas 115 et l'amortisseur de tangage 119 sont ici disposés en avant de la jambe 100, de sorte que l'on obtient un comportement favorable lors du contact de la paire de roues arrière avec le sol S en position cabrée d'atterrissage. Un tel agencement est décrit en détail dans le document FR-A-2.616.410 de la demanderesse, et l'on pourra se référer à ce document pour une meilleure compréhension des avantages qui en résultent.

Toujours dans l'optique de l'optimisation du comportement de l'atterrisseur, il sera avantageux de choisir le dimensionnement des deux bras 141, 143 de la contrefiche repliable 140 de telle façon qu'en position train bas et amortisseur détendu, la direction de l'alignement formé par la contrefiche 140 soit sensiblement orthogonale à l'axe X de la jambe d'atterrisseur 100, ainsi que cela est illustré sur la figure 1, tout en faisant en sorte que cette direction d'alignement converge avec l'axe X aussi près que possible de l'axe d'articulation 111 de la poutre longitudinale 110.

Un tel agencement permet tout d'abord de supprimer les efforts tranchants exercés sur la tige coulissante 103 par le train de roues lors de son appui sur le sol, de sorte que la structure de cette tige coulissante peut être considérablement allégée, dans la mesure où les moments sont repris par la contrefiche repliable 140. De plus, cet agencement minimise aussi les mouvements de pivotement de la jambe d'atterrisseur lors de l'enfoncement de la tige coulissante de ladite jambe.

La contrefiche repliable 140 est ici une contrefiche briseuse qui est équipée de son propre système de déverrouillage 145. Un tel système de déverrouillage est bien connu, de sorte qu'il est inutile de décrire son principe en détail. On se contentera de reconnaître ses composants essentiels, qui comportent successivement une bielle 146 articulée en extrémité du bras supérieur 141 de la contrefiche, un levier 147 qui est articulé sur cette bielle et en extrémité de l'autre bras 143, levier sur lequel vient s'articuler la tige d'un vérin de déverrouillage 148, dont le corps est articulé sur un appendice 149 de ce bras inférieur 143.

Pour ne pas charger la figure, la représentation en position train haut donnée à la figure 1 ne comporte que les organes essentiels de la jambe d'atterrisseur, avec une représentation schématique, sous la forme d'une ligne en traits mixtes, pour l'amortisseur de tangage 119, les bras 116 et 117 du compas, les bras 141 et 143 de la contrefiche repliable, ainsi que la bielle 146, le levier 147, et le vérin 148 du système de déverrouillage associé à ladite contrefiche repliable.

On est ainsi parvenu à réaliser un atterrisseur dont la structure permet à la fois de prévoir un logement de compacité optimale pour la position train haut, et d'avoir une bonne reprise des efforts longitudinaux et latéraux en position train bas, lors du contact avec le sol.

L'invention n'est pas limitée au mode de réalisation qui vient d'être décrit, mais englobe au contraire toute variante couverte par les revendications.

## Revendications

1. Atterrisseur relevable (10), comportant une jambe articulée (100) se composant d'un caisson d'amortisseur (101) équipé d'un axe d'articulation (102) à une structure d'avion, et d'une tige d'amortisseur (103) en extrémité de laquelle est articulée une poutre longitudinale (110) équipée de plusieurs paires de roues (120), ainsi qu'un moyen de contreventement associé à cette jambe articulée et réalisé sous forme d'une contrefiche repliable (140) dont le bras supérieur (141) est articulé à la structure d'avion, caractérisé en ce que :
- l'atterrisseur (10) est du type à raccourcissement de jambe, avec un amortisseur se composant principalement d'une tige coulissante (103) et d'une tige plongeuse (104), et d'un système articulé (130) reliant cette tige plongeuse au caisson d'amortisseur (101) en étant commandé par une bielle (133) fixée sur la structure d'avion, de façon à tirer l'amortisseur lors du relevage de la jambe (100) et à repousser cet amortisseur lors de la descente de ladite jambe ;
- le bras inférieur (143) de ladite contrefiche (140) est articulé à l'extrémité inférieure de la tige coulissante (103), ladite contrefiche (140) étant en outre agencée de telle façon qu'en position train bas, la jambe (100) descendue soit inclinée vers l'avant de l'avion.

2. Atterrisseur selon la revendication 1, caractérisé en ce que l'axe d'articulation (102) du caisson d'amortisseur (101) à la structure d'avion est perpendiculaire au plan longitudinal médian de l'avion, et la contrefiche repliable (140) est disposée en avant de la jambe (100), de façon que le relevage s'effectue longitudinalement vers l'avant.

3. Atterrisseur selon la revendication 1 ou la revendication 2, caractérisé en ce que la jambe (100) comporte en outre un compas (115) dont le bras supérieur (117) est articulé au caisson d'amortisseur (101) et le bras inférieur (116) à la poutre longitudinale (110) qui est articulée en extrémité de la tige coulissante (103).

4. Atterrisseur selon la revendication 3, caractérisé en ce qu'un amortisseur de tangage (119) est interposé entre le compas (115) et le caisson d'amortisseur (101).

5. Atterrisseur selon la revendication 4, caractérisé en ce que l'amortisseur de tangage (119) est articulé sur un appendice (118) du bras supérieur (117) du compas.

6. Atterrisseur selon la revendication 2 et la revendication 4 ou 5, caractérisé en ce que le compas (115) et l'amortisseur de tangage (119) sont disposés en avant de la jambe (100).

7. Atterrisseur selon l'une des revendications 1 à 6, caractérisé en ce que le système articulé (130) associé au raccourcissement de jambe comporte un levier (132) articulé en partie haute du caisson d'amortisseur, comprenant un bras long (132.1) formant un alignement avec un bras (131) articulé sur la tige plongeuse d'amortisseur (104), et un bras court (132.2) articulé en extrémité d'une bielle élastique à seuil (133) qui est fixée par son autre extrémité à la structure d'avion.

8. Atterrisseur selon l'une des revendications 3 à 7, caractérisé en ce que la course de rétraction de l'amortisseur et les deux bras (116, 117) du compas (115) sont agencés de telle façon qu'en position train haut, la poutre longitudinale (110) soit automatiquement dans une position essentiellement horizontale.

9. Atterrisseur selon l'une des revendications 2 à 8, caractérisé en ce que les deux bras (141,143) de la contrefiche repliable (140) sont agencés de telle façon qu'en position train bas et amortisseur détendu, la direction de l'alignement formé par la contrefiche (140) soit sensiblement orthogonale à l'axe (X) de la jambe (100).

10. Atterrisseur selon la revendication 9, caractérisé en ce que la contrefiche repliable (140) est une contrefiche briseuse équipée de son propre système de déverrouillage (145), et cette contrefiche est en outre agencée de telle façon que la direction de l'alignement qu'elle définit en position train bas converge vers l'axe (X) de la tige coulissante (1O3) aussi près que possible de l'axe d'articulation (111) de la poutre longitudinale (110).

## Claims

1. A raisable undercarriage (10) comprising a hinged leg (100) composed of a shock-absorbing main strut (101) having a hinge (102) about which it is hinged to the structure of an aircraft, and of a shock-absorbing rod (103) at the end of which a longitudinal beam (110) is hinged that is equipped with a plurality of pairs of wheels (120), together with bracing means associated with the hinged leg, said bracing means being organized in the form of a foldable brace (140) having a top arm (141) hinged to the aircraft structure, said undercarriage being characterized in that:
the undercarriage (10) is of the leg-shortening type, having a shock absorber composed mainly of a sliding rod (103) and a plunging rod (104), and also of a hinged system (130) connecting the plunging rod to the shock-absorbing main strut (101), the hinged system being controlled by a link (133) fixed to the aircraft structure so as to pull the shock absorber up when the leg (100) is being raised, and so as to push the shock absorber down when the leg is being lowered; and
the bottom arm (143) of the brace (140) is hinged to the bottom end of the sliding rod (103), said brace (140) further being organized so that, in the undercarriage down position, the lowered leg (100) slopes towards the front of the aircraft.

2. An undercarriage according to claim 1, characterized in that the hinge axis (102) about which the shock-absorbing main strut (101) is hinged to the aircraft structure is perpendicular to the longitudinal midplane of the aircraft, and the foldable brace (140) is disposed in front of the leg (100) so that the undercarriage is raised longitudinally and forwards.

3. An undercarriage according to claim 1 or 2, characterized in that the leg (100) further includes a torque linkage (115) having a top arm (117) hinged to the shock-absorbing main strut (101), and a bottom arm (116) hinged to the longitudinal beam (110) which is hinged at the end of the sliding rod (103).

4. An undercarriage according to claim 3, characterized in that a pitch damper (119) is interposed between the torque linkage (115) and the shock-absorbing main strut (101).

5. An undercarriage according to claim 4, characterized in that the pitch damper (119) is hinged on a projection (118) on the top arm (117) of the torque linkage.

6. An undercarriage according to claim 2 and claim 4 or 5, characterized in that the torque linkage (115) and the pitch damper (119) are disposed in front of the leg (100).

7. An undercarriage according to any one of claims 1 to 6, characterized in that the hinged system (130) associated with shortening the leg includes a lever (132) hinged at the top of the shock-absorbing main strut, which lever comprises a long arm (132.1) forming an alignment with an arm (131) hinged on the plunging shock-absorbing rod (104), and a short arm (132.2) hinged at the end of a threshold resilient link (113) which is fixed at its other end to the aircraft structure.

8. An undercarriage according to any one of claims 3 to 7, characterized in that the retraction stroke of the shock absorber and the two arms (116, 117) of the torque linkage (115) are organized such that, in the undercarriage up position, the longitudinal beam (110) is automatically in a substantially horizontal position.

9. An undercarriage according to any one of claims 2 to 8, characterized in that the two arms (141, 143) of the foldable brace (140) are organized such that, in the undercarriage down position and with the shock absorber extended, the direction of the alignment formed by the brace (140) is substantially orthogonal to the axis (X) of the leg (100).

10. An undercarriage according to claim 9, characterized in that the foldable brace (140) is a collapsible brace provided with its own unlocking system (145), and the foldable brace is further organized such that the direction of the alignment that it defines in the undercarriage down position converges with the axis (X) of the sliding rod (103) as close as possible to the hinge axis (111) of the longitudinal beam (110).

## Patentansprüche

1. Einziehfahrwerk, umfassend ein Gelenkbein (100), das aus einem Stoßdämpfergehäuse (101) mit einer Gelenkachse (102) zur Gelenkverbindung mit einem Flugzeugrahmen und einem Stoßdämpferstößel (103) besteht, dessen eines Ende an einem Längsträger (110) angelenkt ist, der mehrere Paare von Rädern (120) trägt, und eine mit diesem Gelenkbein verbundene Verstrebungseinrichtung in Form einer zusammenklappbaren Strebe (140), deren oberer Arm (141) an dem Flugzeugrahmen angelenkt ist, dadurch **gekennzeichnet**, daß das Fahrwerk (10) von dem ein verkürzbares Bein aufweisenden Fahrwerktyp ist mit einem Stoßdämpfer, der im wesentlichen eine Gleitstange (103) und eine Tauchstange (104) sowie ein Gelenksystem (130) umfaßt, welches diese Tauchstange mit dem Stoßdämpfergehäuse (101) verbindet und dabei durch einen Lenker (133) betätigt wird, der an dem Flugzeugrahmen befestigt ist, um den Stoßdämpfer während des Einfahrens des Beines (100) einzuziehen und während des Ausfahrens des genannten Beines auszuschieben, und daß der untere Arm der Strebe (140) an dem unteren Ende der Gleitstange (103) angelenkt ist, wobei die Strebe (140) ferner so ausgebildet ist, daß das Bein (100) bei abgesenktem Fahrwerk in Vorwärtsrichtung des Flugzeuges geneigt ist.

2. Fahrwerk nach Anspruch 1, dadurch **gekennzeichnet**, daß die Gelenkachse (102) der Gelenkverbindung des Stoßdämpfergehäuses (101) mit dem Flugzeugrahmen senkrecht zur Längsmittelebene des Flugzeuges gerichtet ist und daß die zusammenklappbare Strebe (140) vor dem Bein (100) angeordnet ist derart, daß das Einziehen in Längsrichtung nach vorne erfolgt.

3. Fahrwerk nach Anspruch 1 oder 2, dadurch **gekennzeichnet**, daß das Bein (100) ferner eine Schere (115) hat, deren oberer Schenkel (117) an dem Stoßdämpfergehäuse (101) und deren unterer Schenkel (116) an dem Längsträger (110) angelenkt ist, der mit dem Ende der Gleitstange (103) gelenkig verbunden ist.

4. Fahrwerk nach Anspruch 3, dadurch **gekennzeichnet**, daß ein Nick-Schwingungsdämpfer (119) zwischen der Schere (115) und dem Stoßdämpfergehäuse (101) angeordnet ist.

5. Fahrwerk nach Anspruch 4, dadurch **gekennzeichnet**, daß der Nick-Schwingungsdämpfer (119) mit einem Fortsatz (118) des oberen Schenkels (117) der Schere gelenkig verbunden ist.

6. Fahrwerk nach Anspruch 2 und Anspruch 4 oder 5, dadurch **gekennzeichnet**, daß die Schere (115) und der Nick-Schwingungsdämpfer (119) vor dem Bein (100) angeordnet sind.

7. Fahrwerk nach einem der Ansprüche 1 bis 6, dadurch **gekennzeichnet**, daß das der Verkürzung des Beines zugeordnete Gelenksystem (130) einen am oberen Abschnitt des Stoßdämpfergehäuses angelenkten Hebel (132) hat mit einem langen Arm (132.1), der mit einem an der Tauchstange (104) des Stoßdämpfers angelenkten Arm (131) fluchtet, und mit einem kurzen Arm (132.2), der am Ende eines elastischen Schwellwert-Lenkers (133) angelenkt ist, der mit seinem anderen Ende an dem Flugzeugrahmen befestigt ist.

8. Fahrwerk nach einem der Ansprüche 3 bis 7, dadurch **gekennzeichnet**, daß die Einziehbahn des Stoßdämpfers und die beiden Schenkel (116, 117) der Schere (115) derart ausgebildet sind, daß bei angehobenem Fahrwerk der Längsträger (110) automatisch eine im wesentlichen horizontale Position einnimmt.

9. Fahrwerk nach einem der Ansprüche 2 bis 8, dadurch **gekennzeichnet**, daß die beiden Arme (141, 143) der zusammenklappbaren Strebe (140) derart ausgebildet sind, daß bei abgesenktem Fahrwerk und entspanntem Stoßdämpfer die von der Strebe (140) gebildete Fluchtlinie im wesentlichen senkrecht zur Achse (X) des Beines (100) gerichtet ist.

10. Fahrwerk nach Anspruch 9, dadurch **gekennzeichnet**, daß die zusammenklappbare Strebe (140) eine Kniehebelstrebe mit ihrem eigenen Verriegelungssystem (145) ist und daß diese Strebe ferner so ausgebildet ist, daS die Fluchtlinie, welche sie bei abgesenktem Fahrwerk einnimmt, mit der Achse (X) der Gleitstange (103) so nah wie möglich an der Gelenkachse (111) des Längsträgers (110) konvergiert.
